# EUROPEAN PATENT APPLICATION

(11) **EP 1 180 710 A2**
(43) Date of publication of application: **20.02.2002**
(21) Application number: 01119140.0
(22) Date of filing: 08.08.2001
(51) Int. Cl.: G02B 27/01

(54) **Head-up display system**

(30) Priority: 08.08.2000 JP 2000240074
(71) Applicant: Central Glass Company, Limited, Ube-shi, Yamaguchi 755-0001 (JP)
(72) Inventor: Nishikawa, Shinji, Matsusaka-shi, Mie 515-0001 (JP); Tamon, Hiroyuki, Matsusaka-shi, Mie 515-0001 (JP); Yamate, Takashi, Matsusaka-shi, Mie 515-0001 (JP)
(74) Representative: Manitz, Finsterwald & Partner GbR

(57) **Abstract**

The invention relates to a head-up display system including a transparent plate; a liquid crystal display for generating a display light of information; and a laminate of first and second λ/4 films. This laminate is placed on a display panel of the liquid crystal display such that the display light is changed into S-polarized light or P-polarized light and that the S-polarized light or the P-polarized light is incident on the transparent plate. The laminate of first and second λ/4 films may be replaced with a single λ/2 film.

## Description

### BACKGROUND OF THE INVENTION

This invention relates to improvements in a display system for optically projecting a display light of information to be observed by a person from a liquid crystal display as a display device, and more particularly to the display system such as a head-up display (HUD) system which is configured, for example, such that an operator and the like can observe an image of driving information projected as the display light on a windshield glass or on a combiner provided on the windshield glass while looking a frontal view through the windshield glass in such a manner that the driving information is superimposed on the frontal view, in a vehicle or a ship, or the like display system for architecture.

In a HUD system, the display light from a display device is incident on a transparent plate and then reflected therefrom toward a viewer. In fact, a semi-transparent reflective film (e.g., a metal oxide film and a metal thin film) is provided with the transparent plate for reflecting the display light. The reflective film may be put on the surface of a single plate glass or in the inside of a laminated glass.

Some conventional HUD systems have a double image problem due to the display light reflection from two surfaces of a transparent plate. Even in the case of using a semi-transparent reflective film, a double image problem is caused by the reflection from the surface of a transparent plate. The following publications propose HUD systems in order to prevent the double image problem.

Japanese Patent Unexamined Publication JP-A-2-141720 discloses a HUD system having an optical rotatory film (λ/2 film ) for rotating a plane of polarization of light by 90 degrees.

JP-A-2-294615 discloses another HUD system having a transparent birefringent film.

US Patent 5,510,913, corresponding to JP-A-6-40271, discloses another HUD system having an optical rotatory film made of a liquid crystal polymer.

EP 0836108 A2 and A3, corresponding to JP-A-10-115802, disclose another HUD system having a combination of a first optical rotatory layer, a semi-transparent reflective layer and a second optical rotatory layer.

It is usual to use a fluorescent display tube or a liquid crystal display as the displaying device of a HUD system for generating the display light of information to be incident on the glass plate. However, widely used liquid crystal displays except for some small-sized televisions using a liquid crystal display are so set that the axis (plane) of polarization is generally oblique relative to a vertical axis and a horizontal axis of the liquid crystal display panel, i.e, generally along a diagonal line of the liquid crystal display panel in order to keep a bilateral symmetry of angle of visibility. Accordingly, it is impossible to prevent formation of the double image by using the conventional optical rotation film capable of rotating the plane of polarization 90°. In order to prevent formation of the double image, it is required to use a small-sized liquid crystal display having an axis (plane) of polarization vertical or horizontal to a major side of the liquid crystal display panel, or to use a liquid crystal display having a specially adjusted polarization axis.

In order to solve such double image problem in the case of using a common liquid crystal display, JP-A-11-271665, corresponding to Japanese Patent Application No. 10-372523, discloses a HUD system in which an optical rotator for achieving 45 degrees optical rotation is disposed between a liquid crystal display device and a transparent plate.

The direction of the polarization axis of the display light from a liquid crystal display device used in a HUD system is parallel, perpendicular or inclined 45 degrees to a major side of the display panel. Therefore, when it is necessary to direct the polarization axis of the display light toward a particular direction to the reflection surface, for example, to have S-polarized light, it is required to rotate the liquid crystal display device along its display panel plane in accordance with the particular direction. This rotation makes the display image inclined. To prevent this problem, it is possible to use a special optical rotatory film having a particular optical rotation angle for each HUD system. It is, however, difficult to produce such film from the viewpoint of production technique and production cost.

### SUMMARY OF THE INVENTION

It is therefore an object of the present invention to provide a HUD system that is capable of easily preventing double image, even if the polarization axis (plane) of the liquid crystal display device has any angle.

According to the present invention, there is provided a head-up display system comprising (a) a transparent plate; (b) a liquid crystal display for generating a display light of information; and (c) a laminate of first and second λ/4 films. This laminate is placed on a display panel of the liquid crystal display such that the display light is changed into S-polarized light or P-polarized light and that the S-polarized light or the P-polarized light is incident on the transparent plate.

According to the present invention, the laminate of first and second λ/4 films may be replaced with a λ/2 film.

### BRIEF DESCRIPTION OF THE DRAWINGS

Fig. 1 is a sectional view showing a HUD system according to the present invention;
Fig. 2 is an enlarged sectional view showing a condition of the HUD system in which a laminate of the first and second λ/4 films is placed on a display panel of the liquid crystal display;
Fig. 3 is a schematic exploded view showing the adjustment of the polarization direction of the display light by the first and second λ/4 films;
Figs. 4-6 are sectional views respectively showing HUD system's combiners according to Examples 1-3 of the present invention.
Fig. 7 is a view similar to Fig. 2, but showing a condition of the HUD system in which a λ/2 film is placed on a display panel of the liquid crystal display; and
Fig. 8 is a view similar to Fig. 3, but showing the adjustment of the polarization direction of the display light by the λ/2 film.

### DESCRIPTION OF THE PREFERRED EMBODIMENTS

The transparent plate used in the HUD system according to the present invention may be a common inorganic plate glass or an organic plate glass (a transparent resin plate). The transparent plate may be a single plate or a laminate of a first transparent plate (e.g., an inorganic plate glass) and a second transparent plate (e.g., an inorganic plate glass or transparent resin plate) bonded together with an interlayer film. It is possible to use an automotive front windshield (i.e., a laminated glass) as the transparent plate of the HUD system to form a combiner. Alternatively, it is possible to provide a single glass plate other than the front windshield to form a separate combiner. Furthermore, it is optional to use an architectural glass or a partition wall glass as the transparent plate of the HUD system in order to display a variety of information.

In the case of using an automotive windshield (a laminated glass) as the transparent plate of the HUD system, it is preferable to bond the after-mentioned optical rotatory film onto the inboard surface of the outboard-side glass plate from the viewpoint of impact resistance and penetration resistance of the windshield glass. Alternatively, it is preferable to bond the optical rotatory film onto the outboard surface of the inboard-side glass plate from the viewpoint of improving durability of the optical rotatory film, since the sunlight reaches the optical rotatory film through the interlayer film of polyvinyl butyral so that the ultraviolet rays can be absorbed by the interlayer film to some extent.

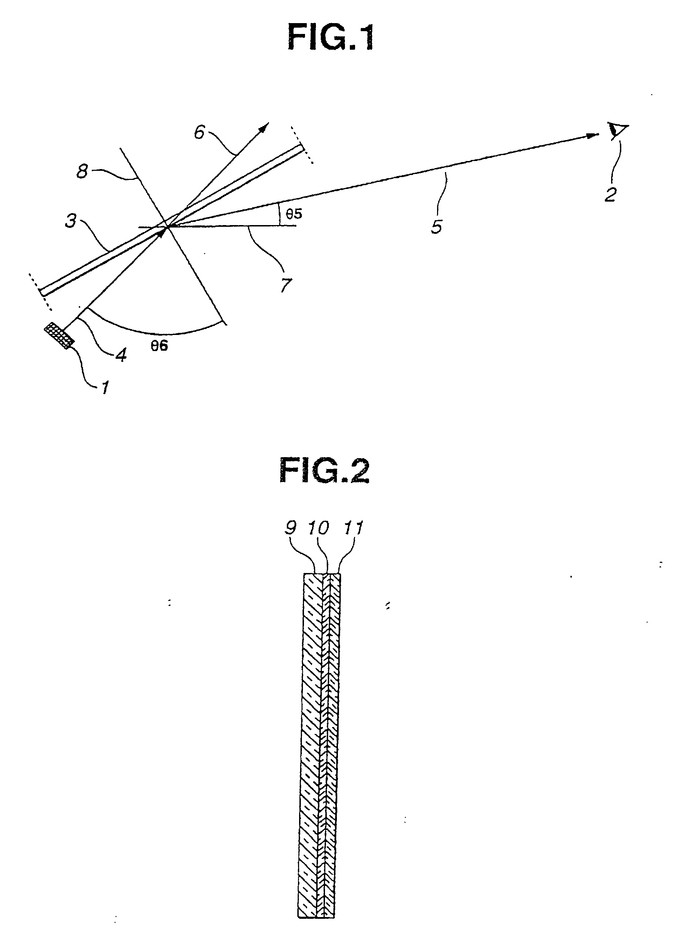

Fig. 1 shows an optical system of the HUD system according to the present invention. In this optical system, an incident light 4 from a liquid crystal display device 1 is incident on a combiner (not shown in Fig. 1) of a transparent plate 3 at an incident angle of θ6 (Brewster's angle), and then the resulting display light 5 reflected from the combiner reaches an eye point 2.

Fig. 2 shows an essential part of the HUD system where a laminate of a first λ/4 film 10 and a second λ/4 film 11 is placed on a liquid crystal display panel 9 of the device 1.

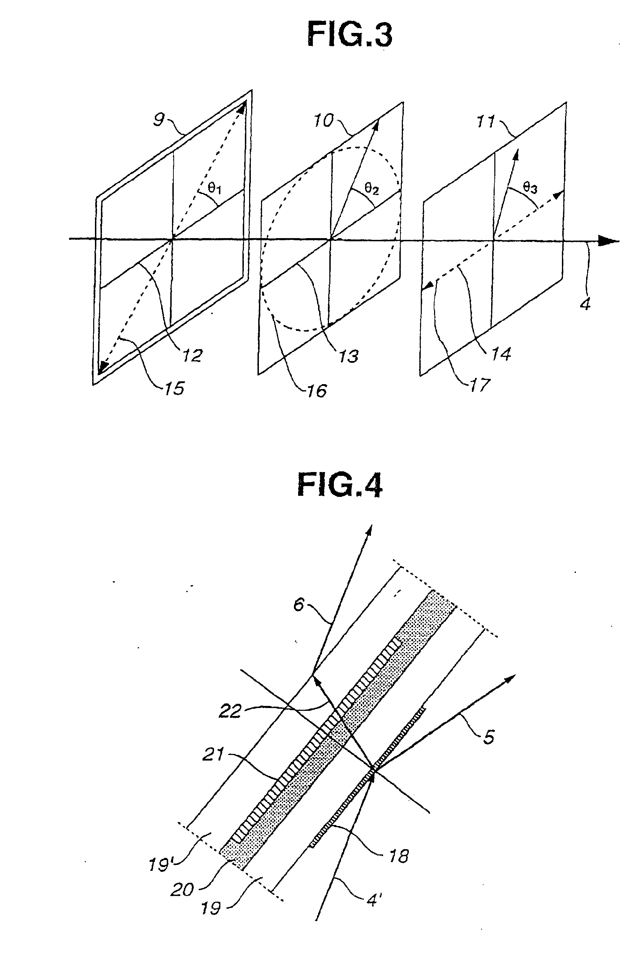

Fig. 3 shows the adjustment of the polarization direction of the incident light 4 by the first and second λ/4 films 10 and 11. This adjustment is explained in detail, as follows. At first, let's suppose that the polarization direction 15 of the display light 4 of the liquid crystal display device 1 is inclined at an angle of θ1 to the horizontal axis 12 of the liquid crystal display panel 9. The first λ/4 film 10 is disposed such that the fast axis of the first λ/4 film 10 has an inclination θ2 at an angle (i.e., θ1+45 degrees) relative to the horizontal axis 13. With this, the light 4 transmitted through the first λ/4 film 10 turns into the circularly polarized light 16. The second λ/4 film 11 can be disposed such that the fast axis of the second λ/4 film 11 has an inclination θ3 at an angle of 45 or 135 degrees relative to the horizontal axis 14. With this, the transmitted light 4 turns into a horizontally polarized light. Thus, the light is incident as S-polarized light 17 on the combiner. Alternatively, the inclination θ3 can be at an angle of 135 or 45 degrees relative to the horizontal axis 14. With this, the transmitted light 4 turns into a vertically polarized light. Thus, the light is incident as P-polarized light on the combiner.

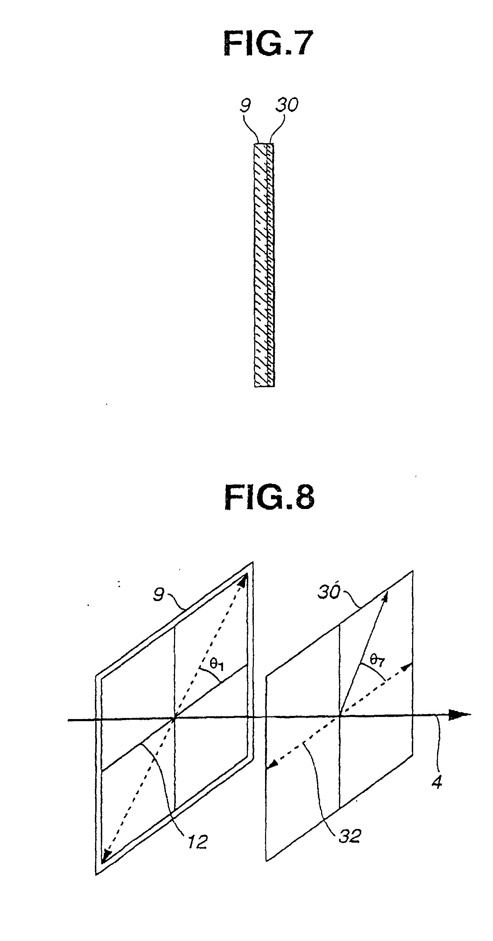

Fig. 7 shows the adjustment of the polarization direction of the incident light 4 by a single λ/2 film 30. This adjustment is explained in detail, as follows. At first, let's suppose that the polarization direction of the display light 4 of the liquid crystal display device 1 is inclined at an angle of θ1 to the horizontal axis 12 of the liquid crystal display panel 9. The λ/2 film 30 is disposed such that the fast axis of the λ/2 film 30 has an inclination θ7 at an angle (i.e., the total of a half of the S-polarized or P-polarized light and a half of θ1) relative to the horizontal axis.

In case that a laminate of the first and second λ/4 films 10 and 11 is placed on the liquid crystal display panel 9, it is optional to place the second λ/4 film 11 on the first λ/4 film 10 in a manner to arrange θ2 and θ3 of Fig. 3 in the same direction. With this, the laminate of the first and second λ/4 films 10 and 11 serves as a single λ/2 film. In this case, θ2 is adjusted to an angle that is the same as θ7 of the λ/2 film 30, thereby obtaining S-polarized or P-polarized light.

As shown in Figs. 4-6, the combiner of the HUD system can be defined as being an integral body prepared by forming a semi-transparent reflective film and an optically rotatory film, which rotates the polarization direction of the display light by 90 degrees, on the transparent plate (e.g., a plate glass or transparent plastic plate).

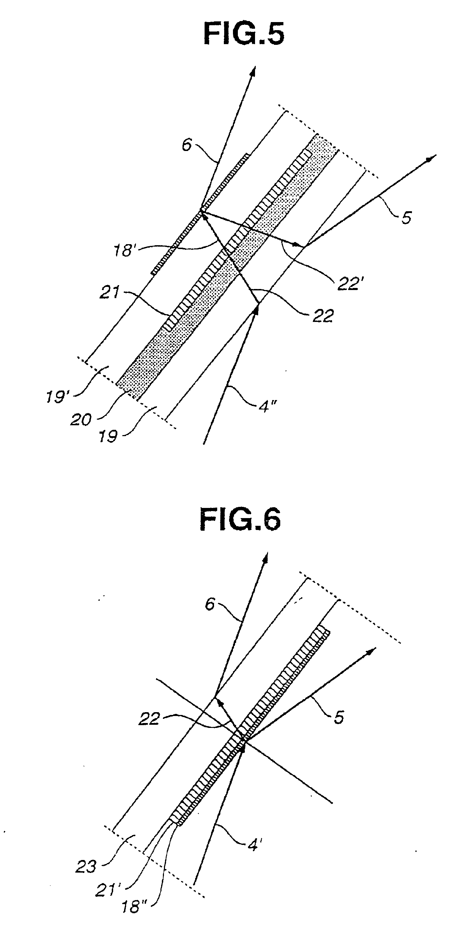

In case of using an automotive front windshield (a laminated glass) as the transparent plate, it is possible to dispose the optical rotatory film between the interlayer film and one glass plate of the laminated glass. If S-polarized light is incident on the combiner, it is optional to dispose a semi-transparent reflective film on the inboard surface of the transparent plate (see Fig. 4). If P•polarized light is incident thereon, it is optional to dispose a semi-transparent reflective film on the outboard surface of the transparent plate (see Fig. 5). In case that the transparent plate is a single plate glass or a single transparent plastic plate, it is optional to form a semi-transparent reflective film on the optical rotatory film and to bond the optical rotatory film to the transparent plate with a transparent adhesive. With this, it becomes possible to prevent the direct contact between the semi-transparent reflective film and the transparent plate.

The optical rotatory film is formed preferably of a liquid crystal polymer that is in twisted nematic orientation under a liquid crystal condition and is in a glassy state at a temperature lower than liquid crystal transition point thereof. With this, it becomes possible to prevent double image throughout the visible light region. The optical rotatory film serves to rotate the polarization direction of the light by 90 degrees. The optically rotatory film may be a transparent film having birefringence or a so-called λ/2 film.
The optical rotatory film can be prepared by the following first or second method. In the first method, the liquid crystal polymer is applied to a transparent substrate (e.g., a plastic film made of polyethylene terephthalate (PET)). Then, a shearing force is applied to the liquid crystal polymer, and thereafter the liquid crystal polymer is subjected to heat-treatment and then cooling so that a liquid crystal orientation is fixed. In the second method, an oriented film is formed on a transparent substrate. The oriented film may a rubbing polyimide film, a rubbing polyvinyl alcohol film, or a film formed by depositing silicon oxide on the substrate. Then, a liquid crystal polymer is applied to the oriented film, and then subjected to heat-treatment and then cooling so that the orientation of the liquid crystal polymer is fixed. After this fixation, it is optional to use the liquid crystal polymer itself as the optical rotatory film without using its transparent substrate. The optical rotatory film may have a thickness of 0.5 to 20µm, preferably 1-15µm.

An optical rotation angle at which the plane of polarization of light is rotated under the effect of the optical rotatory film can be regulated by controlling the contents of optically active unit components in the liquid crystal polymer, the thickness of the liquid crystal polymer, the heat-treatment condition for achieving liquid crystal property, and the like.

As stated above, the optical rotatory film can be made of a liquid crystal polymer that is in twisted nematic orientation under a liquid crystal condition and is in a glassy state at a temperature lower than liquid crystal transition point thereof. Examples of such liquid crystal polymer are main-chain type polymers such as optically active polyester, polyamide, polycarbonate, and polyesterimide, and side-chain type polymers such as optically active polyacrylate, polymethacrylate, polymalonate, and polysiloxane. Additionally, the liquid crystal polymer may be a polymer composition that is prepared by adding an optically active polymer(s) to such main-chain type polymer or side-chain type polymer which is optically inactive.

Concrete examples of the liquid crystal polymer are the following first to seventh polymers. All these polymers have a glass transition point (temperature) ranging from 0 °C to 150 °C, and are in twisted nematic orientation at a temperature higher than the glass transition point and is in a glassy state at a temperature lower than the glass transition point.

The first polymer is represented by the following chemical formula: 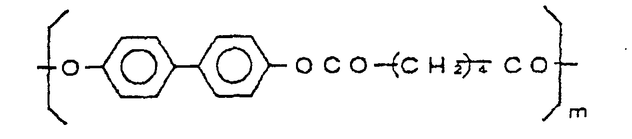 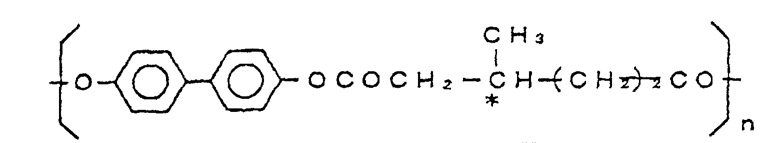 where m/n may be 70/30 - 99.9/0.1, preferably 90/10 - 99.8/0.2, more preferably 95/5 - 99.7/0.3, and * represents an optically active carbon. This symbol * represents the same in the after-mentioned formulas, too.

The second polymer is represented by the following chemical formula: 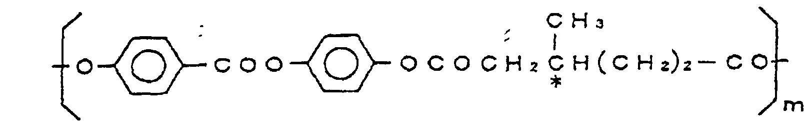 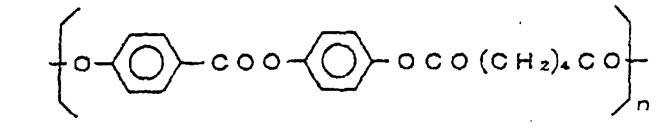 where m/n may be 0.1/99.9 to 10/90, preferably 0.3/99.7 to 5/95.

The third polymer is represented by the following chemical formula: 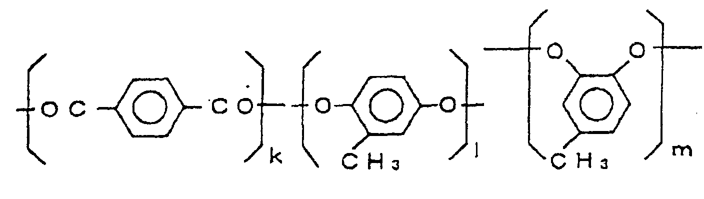 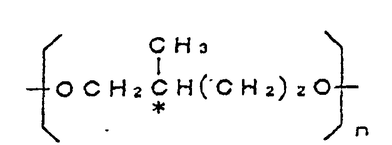 where k = l+m+n, and k/n is 90/10 to 99.9/0.1, preferably 95/5 to 99.7/0.3, and l/m may be 5/95 - 95/5.

The fourth polymer is represented by the following chemical formula: 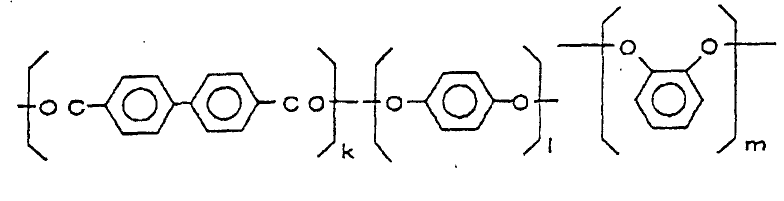 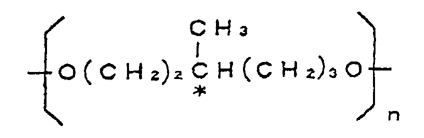 where k = l+m+n, and k/n is 90/10 to 99.9/0.1, preferably 95/5 to 99.7/0.3, and l/m may be 5/95 - 95/5.

The fifth polymer is a polymer mixture of a polymer represented by the following chemical formula (A) and another polymer represented by the following chemical formula (B): 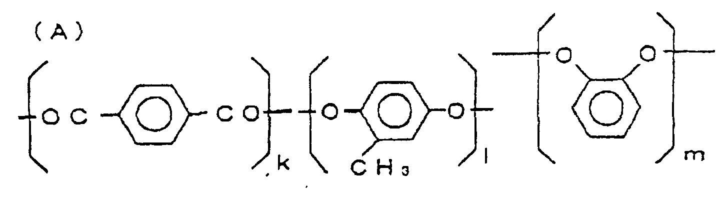 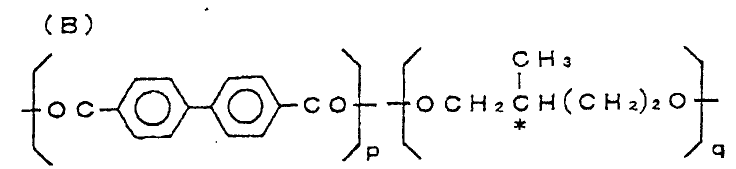 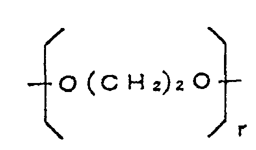 where (A)/(B) by weight may be 80/20 - 99.9/0.1, preferably 90/10 - 99.8/0.2, more preferably 95/5 - 99.7/0.3, k = l+m, l/m may be 25/75 - 75/25, p = q+r, and q/r may be 20/80 - 80/20.

The sixth polymer is a polymer mixture of a polymer represented by the following chemical formula (A) and a compound (B): 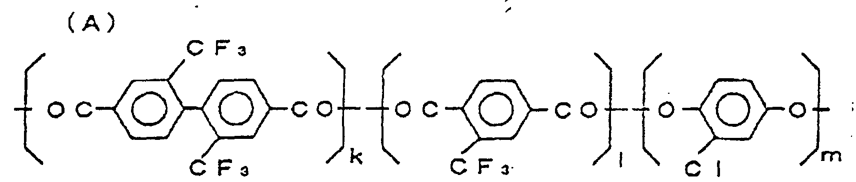 (B) CHOLESTERYL BENZOATE
where (A)/(B) by weight may be 70/30 - 99.9/0.1, preferably 80/20 - 99.8/0.2, more preferably 90/10 - 99.7/0.3, m = k+l, and k/l may be 20/80 - 80/20.

The seventh polymer is a polymer mixture of a polymer represented by the following chemical formula (A) and another polymer represented by the following chemical formula (B): 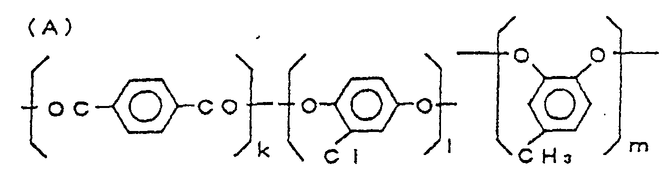 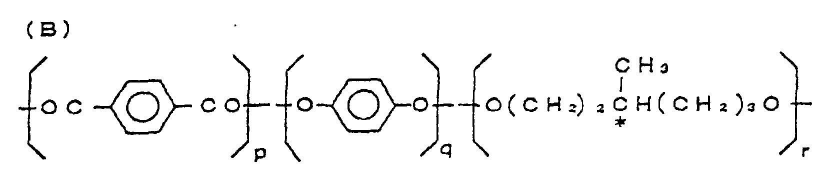 where (A)/(B) by weight may be 70/30 - 99.9/0.1, preferably 80/20 - 99.8/0.2, more preferably 90/10 - 99.7/0.3, k = l+m, l/m may be 25/75 - 75/25, p = q+r, and q/r may be 20/80 - 80/20.

The above-mentioned polymers have an inherent viscosity (reIating to molecular weight) preferably within a range of 0.05-3.0 dl/g, more preferably within a range of 0.07-2.0 dl/g, when it is measured at 30 °C by using a variety of solvents such as tetrahydrofuran, acetone and a solvent mixture of phenol/tetrachloroethane (60/40). If the inherent viscosity is lower than 0.05 dl/g, the resulting liquid crystal polymer may become too low in strength. If the inherent viscosity is higher than 3.0 dl/g, the viscosity upon the liquid crystal formation may become too high. This may degrade the liquid crystal orientation and may require a long time for obtaining the liquid crystal orientation.

When the display light of information is incident on the transparent plate at Brewster's angle, the display light may be S-wave (S-polarized light) having an electric field direction perpendicular to the plane of incidence, or P-wave (P-polarized light) having an electric field direction parallel with the plane of incidence. S-wave is, however, preferable (see Figs. 4 and 6) because the reflection from the nearest surface of the transparent plate can be made so as to increase the amount of the light reflected toward the viewer's eye point, as compared with the case of P-wave (see Fig. 5).

The HUD system may be configured to reflect the display light directly from the surface of the transparent plate (e.g., plate glass). It is, however, preferable to form a semi-transparent reflective film on the transparent plate in order to reflect the display light from the surface of the semi-transparent reflective film, since it is possible to increase the amount of the light reflected toward the viewer's eye point.

As shown in Figs. 4 and 6, it is preferable to form a semi-transparent reflective film on the inner or near surface of the transparent plate when the incident light is S-polarized light. As shown in Fig. 5, it is preferable to form the same on the outer or far surface of the transparent when it is P-polarized light. It is preferable to form the semi-transparent reflective film by a physical or chemical vapor deposition from a raw material selected from metal oxides, metal nitrides, metal carbides, and metals.

The following nonlimitative examples are illustrative of the present invention.

### EXAMPLE 1

In this example, a HUD system shown in Figs. 1-4 was formed by using an automotive front windshield (i.e., a laminated glass) as the transparent plate, as follows.

As shown in Fig. 4, a laminated glass was prepared by interposing an interlayer film 20 between glass plates 19 and 19'. Each glass plate was 2 mm in thickness. In fact, an optical rotatory film 21 was interposed between the glass plate 19' and the interlayer film 20. Furthermore, a TiO₂ thin film 18 as the semi-transparent reflective film was formed on the glass plate 19 by a CVD method, thereby preparing a combiner (shown in Fig. 4) of the HUD system.

The optical rotatory film 21 was prepared by applying a liquid crystal polymer to a transparent plastic film made of PET, then by applying a shearing force to the liquid crystal polymer, and then by subjecting the liquid crystal polymer to a heat treatment and a cooling to fix the liquid crystal orientation. This liquid crystal polymer was the same as the above-mentioned third polymer. Thus, the liquid crystal polymer is in twisted nematic orientation under a liquid crystal condition and is in a glassy state at a temperature lower than liquid crystal transition point thereof. In fact, the optical rotatory film was prepared to have a capability for rotating the plane of polarization by 90 degrees by suitably controlling the contents of optically active unit components in the liquid crystal polymer, the thickness of the liquid crystal polymer, the heat-treatment condition for achieving liquid crystal property, and the like.

Then, a HUD optical system shown in Fig. 1 was formed. As shown in Fig. 3, the liquid crystal display device 1 was prepared in a manner to incline the polarization direction of its display light at an angle (θ1) of 45 degrees to the horizontal axis of the liquid crystal display panel 9. The liquid crystal display device was disposed at a position to have a distance of 300 mm from the combiner. As shown in Fig. 2, a laminate of the first and second λ/4 films 10 and 11 was placed on the liquid crystal display panel 9. In fact, as shown in Fig. 3, the first λ/4 film 10 was disposed such that the fast axis of the first λ/4 film 10 had an inclination θ2 at an angle of 90 degrees relative to the horizontal axis 13. Furthermore, the second λ/4 film 11 was disposed such that the fast axis of the second λ/4 film 11 had an inclination θ3 at an angle of 135 degrees relative to the horizontal axis 14. Therefore, the incident light 4' shown in Fig. 4 was S-polarized light (S-wave).

As shown in Fig. 4, the incident light 4' (S-wave) is partly reflected from the TiO₂ thin film 18, and the reflected light 5 reaches the viewer's eye point. The rest (i.e., the display light 22) of the incident light 4' is transmitted through the laminated glass. Then, the display light 22 (S-wave) is turned into P-polarized light (P-wave) by the optical rotatory film 21. Therefore, the display light 22 is not reflected from the outer surface of the glass plate 19', but emerges from the glass plate 19' as the transmitted light 6.

The laminated glass was inclined 36 degrees toward the viewer's eye point. Then, a viewer having the eye point 2 away from the combiner by about 800 mm observed the combiner downwardly to have an angle (θ5) of 20 degrees, as shown in Fig. 1. With this observation, a clear display with no double image was recognized.

### EXAMPLE 2

In this example, Example 1 was slightly modified as follows.

As shown in Fig. 5, a TiO₂ thin film 18' was formed on the outer surface of the glass plate 19' by the same manner.

The disposition of the second λ/4 film 11 was modified as follows. In fact, the second λ/4 film 11 was disposed such that the fast axis of the second λ/4 film 11 had an inclination θ3 at an angle of 45 degrees relative to the horizontal axis 14. Therefore, the incident light 4" shown in Fig. 5 was P-polarized light (P-wave).

As shown in Fig. 5, the incident light 4" (P-wave) is incident on the combiner. It is not reflected from the surface of the glass plate 19, but is transmitted through the laminated glass. Then, the light 22 is turned into S-wave by the optical rotatory film 21. After that, the light 22 is partly reflected from the TiO₂ thin film 18'. The rest of the light 22 emerges from the outer surface of the glass plate 19' as the transmitted light 6. The reflected light 22' (S-wave) is transmitted again through the laminated glass and turned into P-wave by the optically rotatory film 21. Therefore, the light 22' (P-wave) is not reflected from the surface of the glass plate 19, but emerges from the glass plate 19 as the light 5. This display light 5 reaches the viewer's eye point.

With the observation of the combiner, a clear display with no double image was recognized.

### EXAMPLE 3

In this example, Example 1 was slightly modified as follows. As shown in Fig. 6, an optical rotatory film 21', which was the same as that of Example 1, was formed on a transparent acrylic plate 23 having a thickness of 3 mm. Furthermore, a semi-transparent reflective film (A1 thin film) 18"was formed on the optical rotatory film 21' by sputtering, thereby forming a combiner.

With the observation of the combiner, a clear display with no double image was recognized.

### EXAMPLE 4

In this example, Example 1 was slightly modified as follows. As shown in Fig. 7, the λ/2 film 30 was placed on the liquid crystal display panel 30. In fact, as shown in Fig. 8, the λ/2 film 30 was disposed such that the fast axis of the λ/2 film 30 had an inclination of θ7 at an angle of 22.5 degrees relative to the horizontal axis. Therefore, the incident light was S-polarized light (S-wave).

With the observation of the combiner, a clear display with no double image was recognized.

### EXAMPLE 5

In this example, Example 2 was slightly modified as follows. The first λ/4 film 10 was disposed such that the fast axis of the first λ/4 film 10 had an inclination θ2 at an angle of 67.5 degrees relative to the horizontal axis 13. Furthermore, the second λ/4 film 11 was disposed such that the fast axis of the second λ/4 film 11 had an inclination θ3 that was the same as that of the first λ/4 film 10. Therefore, the incident light was P-polarized light (P-wave).

With the observation of the combiner, a clear display with no double image was recognized.

The entire disclosure of Japanese Patent Application No. 2000-240074 filed on August 8, 2000, including specification, drawings, claims and summary, of which priority is claimed in the present application, is incorporated herein by reference in its entirety.

## Claims

1. A head-up display system comprising:
a transparent plate;
a liquid crystal display for generating a display light of information; and
a laminate of first and second λ/4 films, said laminate being placed on a display panel of said liquid crystal display such that said display light is changed into S-polarized light or P-polarized light and that said S-polarized light or said P-polarized light is incident on said transparent plate.

2. A head-up display system according to claim 1, wherein said display light is incident on said transparent plate at Brewster's angle.

3. A head-up display system according to claim 1, wherein, when a polarization direction of said display light is inclined at a first angle to a horizontal axis of said display panel, said first λ/4 film is disposed such that a fast axis of said first λ/4 film has an inclination at a second angle relative to a horizontal axis of said first λ/4 film, said second angle being a total of said first angle and 45 degrees.

4. A head-up display system according to claim 3, wherein said second λ/4 film is disposed such that a fast axis of said second λ/4 film has an inclination at a third angle of -45 or 135 degrees relative to a horizontal axis of said second λ/4 film, thereby changing said display light into said S-polarized light.

5. A head-up display system according to claim 3, wherein said second λ/4 film is disposed such that a fast axis of said second λ/4 film has an inclination at a third angle of -135 or 45 degrees relative to a horizontal axis of said second λ/4 film, thereby changing said display light into said P-polarized light.

6. A head-up display system according to claim 1, further comprising an optical rotatory film for rotating a polarization direction of said S-polarized light or said P-polarized light by an angle of 90 degrees.

7. A head-up display system according to claim 6, wherein said optical rotatory film is a liquid crystal polymer that is in twisted nematic orientation under a liquid crystal condition and is in a glassy state at a temperature lower than liquid crystal transition point of said liquid crystal polymer.

8. A head-up display system according to claim 6, wherein said optical rotatory film has a thickness of 0.5-20µm.

9. A head-up display system according to claim 1, wherein, when said S-polarized light is incident on said transparent plate, a semi-transparent reflective film is formed on an inner surface of said transparent plate for reflecting said S-polarized light.

10. A head-up display system according to claim 1, wherein, when said P-polarized light is incident on said transparent plate, a semi-transparent reflective film is formed on an outer surface of said transparent plate for reflecting a light transmitted through said transparent plate.

11. A head-up display system according to claim 1, wherein said transparent plate is a laminated glass comprising inner and outer glass plates bonded together by an interlayer film therebetween.

12. A head-up display system according to claim 11, further comprising an optical rotatory film for rotating a polarization direction of a light transmitted through said transparent plate, by an angle of 90 degrees, said optical rotatory film being interposed between said inner and outer glass plates.

13. A head-up display system according to claim 12, wherein, when said S-polarized light is incident on said transparent plate, a semi-transparent reflective film is formed on an inner exposed surface of said inner glass plate for reflecting said S-polarized light.

14. A head-up display system according to claim 12, wherein, when said P-polarized light is incident on said transparent plate, a semi-transparent reflective film is formed on an outer exposed surface of said outer glass plate for reflecting a light transmitted through said laminated glass.

15. A head-up display system according to claim 1, wherein said transparent plate is a single transparent plate,
wherein an optical rotatory film for rotating a polarization direction of said S-polarized light by an angle of 90 degrees is formed on an inner surface of said transparent plate,
wherein a semi-transparent reflective film is formed on said optical rotatory film for reflecting a part of said S-polarized light incident on said semi-transparent reflective film.

16. A head-up display system comprising:
a transparent plate;
a liquid crystal display for generating a display light of information; and
a λ/2 film placed on a display panel of said liquid crystal display such that said display light is changed into S-polarized light or P-polarized light and that said S-polarized light or said P-polarized light is incident on said transparent plate.
